# EUROPEAN PATENT APPLICATION

(11) **EP 4 614 371 A1**
(43) Date of publication of application: **10.09.2025**
(21) Application number: 25161447.5
(22) Date of filing: 04.03.2025
(51) Int. Cl.: G06F 21/60, G06F 21/62, H04L 41/5054, H04L 9/40, H04L 67/104

(54) **SYSTEMS AND METHODS FOR SETTING UP AND MAINTAINING MULTI-PARTY COMPUTATION ENVIRONMENTS**

(30) Priority: 04.03.2024 US 202418594777
(71) Applicant: Robert Bosch GmbH, 70442 Stuttgart (DE)
(72) Inventor: TRIEFLINGER, Sven, 71272 Renningen (DE); PAPPACHAN, Pradeep M., Pittsburgh, PA, 15216 (US); JAIN, Shalabh, Pittsburgh, PA, 15213 (US); FAHRAFELLNER, Michael, 1110 Wien (AT)
(74) Representative: Isarpatent

(57) **Abstract**

A method for implementing a cooperative computing environment includes, using one or more computing devices, establishing a first confidential computing system, executing, on the first confidential computing system, a controller software module, executing, using the controller software module, an interface configured to provide, to a plurality of participating parties, access to the computing environment, receiving, via the interface from a requesting participating party of the plurality of participating parties, a request to initiate a setup process for the computing environment on a second confidential computing system, and, in response to a determination that non-requesting participating parties of the plurality of participating parties approved the request, completing the setup process for the computing environment in accordance with one or more criteria defined by the request.

## Description

### TECHNICAL FIELD

The present disclosure relates to multi-party computation environments.

### BACKGROUND

Various collaborative processes (e.g., digital cleanrooms, collaborative learning for AI, etc.) involve multiple entities/parties. In one example, distributed software integrations and build processes may involve multiple entities/parties independently developing and testing respective portions (e.g., software modules) of a software application and then integrating the various software modules to build the application within a computing environment (e.g., as implemented in a cloud computing system). For example, in the automotive industry, original equipment manufacturers (OEMs) and suppliers may collaborate to develop software applications that are executed on embedded systems inside vehicles. This model of collaboration may include each entity separately developing and testing some portion of the software application to defined specifications (e.g., respective requirements, application program interface (API) specifications, etc.) and eventually integrating the various software portions before final testing and implementation. In some examples, a computing environment is configured to be set up and operated by a single party or entity with full administrative power.

### SUMMARY

A method for implementing a cooperative computing environment includes, using one or more computing devices, establishing a first confidential computing system, executing, on the first confidential computing system, a controller software module, executing, using the controller software module, an interface configured to provide, to a plurality of participating parties, access to the computing environment, receiving, via the interface from a requesting participating party of the plurality of participating parties, a request to initiate a setup process for the computing environment on a second confidential computing system, and, in response to a determination that non-requesting participating parties of the plurality of participating parties approved the request, completing the setup process for the computing environment in accordance with one or more criteria defined by the request.

Other embodiments include systems, one or more processors or processing devices, or other circuitry configured to implement functions corresponding to the principles of the present disclosure.

### BRIEF DESCRIPTION OF THE DRAWINGS

FIG. 1 illustrates an example cooperative computing environment.
FIG. 2 illustrates an example cooperative computing environment including a management gateway according to the principles of the present disclosure.
FIG. 3 is a block diagram of an example computing device configured to implement functions of the systems and methods of the present disclosure.
FIG. 4 illustrates steps of an example method for setting up and maintaining a cooperative computing environment according to the principles of the present disclosure.

### DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative bases for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical application. Various combinations and modifications of the features consistent with the teachings of this disclosure, however, could be desired for particular applications or implementations.

"A", "an", and "the" as used herein refers to both singular and plural referents unless the context clearly dictates otherwise. By way of example, "a processor" programmed to perform various functions refers to one processor programmed to perform each and every function, or more than one processor collectively programmed to perform each of the various functions.

In some examples, a computing environment is configured to be set up and operated by a single party or entity with full administrative power. If such an environment is used in collaborative or cooperative settings in which multiple entities contribute potentially sensitive or valuable digital assets (e.g., data, algorithms) to the overall system, the power of that single party to change the environment at any time in any way is problematic. For example, collaborating entities may not trust each other with respective intellectual property (IP), an entity with administrative power may now know assets (e.g., intellectual property) of other entities, etc. One established method for resolving this issue is to delegate the setup and operation of the computing environment (CE) to a trusted (third) party (TP). Trust extended to the TP is based on an assumption that the TP does not have interest in the digital assets that would create an incentive to extract or modify the digital assets, or the TP may be bound by various contracts or agreements not to disclose assets or other information. Further, capability of the TP to operate the environment in a secure way to prevent internal and external security threats is assumed.

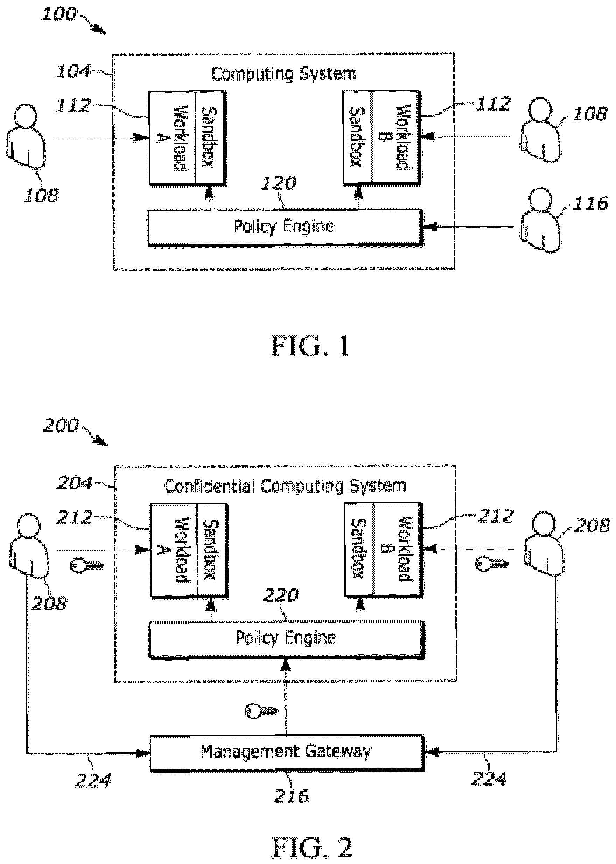

FIG. 1 illustrates an example cooperative computing environment (CE) 100. For example, the CE 100 includes a computing system 104 (e.g., a computing environment implemented in a cloud computing system, one or more servers or distributed computing devices, a computing cluster, etc.) accessible by multiple entities that are users or providers of digital assets within the CE 100, which, in some examples, may correspond to developer entities 108. The entities 108 may independently develop and test respective portions (e.g., workloads 112) of a software application within the computing system 104.

If one or more of the entities 108 contribute potentially sensitive or valuable digital assets to the computing system 104, it may not be desirable for any one of the entities 108 to control the CE 100. Accordingly, in some examples, the CE 100 is configured to be set up and operated by a single party or entity with full administrative power. For example a trusted third party (TP) 116 may be assigned full administrative power, which may include access to a policy engine 120 configured to control setup of the computing system 104, changes to the computing system 104 subsequent to setup, etc. In some examples, the trusted TP 116 may be one of the entities 108. However, trust extended to the TP 116 is based on an assumption that the TP 116 does not have interest in the digital assets that would create an incentive to extract or modify the digital assets. Further, capability of the TP 116 to operate the CE 100 in a secure way to prevent internal and external security threats must be assumed by the entities 108.

Cooperative CE systems and methods according to the present disclosure are configured to remove the need for a TP by using advanced privacy-preserving computing techniques to establish a confidential CE (CCE) that provides a consensus-based setup and management mechanism for the CE that performs a management operation only if all contributing entities agree. The systems and methods of the present disclosure replace the trust-based operations model for multi-party CEs with a model that technically enforces the rules of cooperation within the CE and allows auditing of the enforcement process.

For example, a mechanism is provided for setting up and operating a multi-owned computing environment (MOCE) (e.g., a CE that is set up and operated under the governance of more than one party/entity). The MOCE includes an interface for admitting the execution of management operations of a cluster (e.g., one or more build servers, computing devices, etc. used by multiple parties to implement a software build) only if a consensus among the owners of the environment is reached that an operation is permitted. Integrated policy engines implement versatile and flexible operation management (e.g., to define which operations can be performed and by which entities, in which circumstances, etc.). A sandboxing mechanism for workloads of the respective entities is executed within the MOCE and allows for tight control over what a workload is permitted to do (e.g., accessing other digital assets, opening network connections, etc.), and which resources the workload is permitted to consume (e.g., main memory, CPU/GPU time, etc.). The MOCE may further include a tamper-proof auditing mechanism to track which management operations have been performed by which entities (and when the management operations were performed) and a backup and recovery mechanism.

As used herein and described below in more detail, "CMMI" refers to a consensus-driven management interface. "Participating party" (PP) refers to a party participating in a collaboration enabled by the principles of the present disclosure on the CE. The terms "party" and "entity" may be used interchangeably. A "computing environment" (CE) refers to the environment used by the PPs for collaboration, such as on a software build. Although described with respect to a collaboration for a software build, in other examples the principles of the present disclosure may be implemented for other types of collaborative CEs. A "hosting party (HP) refers to the party that instantiates the CE on its own or third-party infrastructure. "Trusted execution environment (TEE) refers to one example environment that is secure in accordance with confidential computing techniques that implement hardware protection techniques. A TEE provides the ability to establish trust in the TEE by a process called remote attestation (RA). A controller TEE is a TEE that hosts the control logic implementing the CMMI and performs the management actions on the CE when consensus is reached. A controller TEE is implemented using one or more computing devices, processors or processing devices, etc.

TEE technologies include process-based and virtual machine (VM)-based TEEs. In each type of TEE, platform hardware protects a region of memory using encryption and integrity protection. The encryption key is unique to each region that must be protected and is only available to hardware (e.g., is not available to privileged system software, such as BIOS, a hypervisor, the OS, etc.). Therefore, the TEE memory is not accessible through various threat vectors. In the case of a process-based TEE, the region of memory protected by encryption encompasses part of a process' memory (e.g., the part of memory where sensitive code and data reside). In a VM-based TEE, the region of memory protected encompasses the entire memory of the virtual machine.

With respect to RA, attestation is the process of demonstrating to a verification entity that an application is running on a machine with a TEE and that the identity of the application is what the verification entity expects the application to be. Upon successful attestation, the verification entity can provision sensitive information required for computation (e.g., secret keys) in the TEEs. For example, a movie streaming service can provision a movie decryption key to a movie player running on a remote machine if the player can present the movie streaming service with an attestation report that proves that the movie player is running in a TEE and that the movie player is the application it claims to be. The attestation report comes from hardware (e.g., a CPU) on the platform. The attestation report is a hardware-signed statement that includes, among other things, the measurement (e.g., cryptographic hash) of the code and data of the application that is initially loaded into the TEE (e.g., the cryptographic hash of a piece of code and/or data is unique with extremely high probability).

A computing environment according to the present disclosure is configured to implement a consensus-driven management interface (CMMI) or consensus-driven management API (CAPI). A CMMI or CAPI according to the present disclosure is an interface over which PPs can make a proposal or request for invoking a management functionality exposed over the interface. The functionality is, however, not invoked right after the proposal has been made by a PP but is kept in a pending state until all (or a defined subset) of the PPs have acknowledged the proposal (e.g., until a consensus has been reached to invoke the functionality). Other (e.g., non-requesting) parties either synchronously poll for pending CMMI proposals or are notified of those over an asynchronous communication channel. The non-requesting parties can acknowledge or reject the proposed management operation. In an example, a CMMI can be implemented in various ways in which the consensus mechanism could be implicit (e.g., single requests that are cryptographically signed by all parties, which, in some examples, can be performed in the CE, allowing the use of CE-native mechanisms to interact with the system, such as a custom resource for representing proposals and approvals in a Kubernetes-based CE) or explicit (e.g., by using state machines to track the acknowledgements of the parties). The PPs authenticate themselves when invoking a CMMI function (e.g., using X.509 certificates or another authentication mechanism). Well-known cryptographic methods can be used to sign requests (e.g., PKI-based signature schemes). While a web-based or representational state transfer (REST)-based approach for implementing the CMMI may be used, other example mechanisms may be used. One example is a ledger-based approach in which management operations are considered as the transactions managed by the ledger.

In an example embodiment, to set up the CE according to the principles of the present disclosure, the hosting party (HP) launches a TEE, referred to herein as the controller TEE (CTEE), on a computing device or platform configured to provide the required confidential computing support. The computing device can be a public cloud provider, an on-premises datacenter (e.g., local to one or more of the entities), or combinations thereof.

As part of launching the CTEE, the HP injects credentials for all or a subset of the PPs (e.g., credentials previously provided by the PPs). The credentials may be embedded within an image of an operating system (OS) implemented by the CE (e.g., in examples where the TEE is a VM-based TEE). In other examples (e.g., for a Linux Library Operating System (LibOS) approach), the credentials may be embedded into a Docker image or mounted as a file system volume. In any example, the credentials may be public (i.e., publicly accessible by all entities). Accordingly, an authentication mechanism such as X.509 certificates may be used. In still other examples, the credentials can be injected using a secret injection mechanism based on remote attestation after the CTEE has been launched.

The HP causes the CTEE to launch a controller software module. The PPs can verify the controller software module using the process of remote attestation where a measurement (e.g., hash) of the software module is reported by the CTEE. In an example, the source code of the controller software module is made available to all participating parties/entities with the ability to rebuild the deployed software module in a reproducible manner. Using this, the parties can generate the expected measurement value independently. In another example, the reference cryptographic hash of the controller software module is provided by the HP. However, in this example, the HP must be trusted to deploy the controller software module in accordance with previously agreed upon software module specifications.

The HP injects HP credentials (i.e., credentials of the HP) for setting up additional infrastructure to deploy the CE at a subsequent time (e.g., via an infrastructure as a service (IaaS) platform, in an on-premises datacenter, etc.). In examples where a public cloud provider or cloud computing system is used, the CTEE can optionally generate a dedicated account on the cloud provider platform. In this example, the infrastructure can stay under full control of the CTEE as the credentials are not shared outside the CTEE with any other entities.

In an example, the controller software module provides a network-exposed API that implements the CMMI, which allows participating parties to access the management functionality of the CMMI. In other examples, this interaction could be performed using file exchanges or other mechanisms. Prior to invoking the CMMI, the PPs perform remote attestation to establish trust in the controller software module (e.g., trust that the TEE platform is in a secure state and that the TEE hosts the expected controller software module). For example, the reproducible build or the published cryptographic hash described above may be used to verify the controller software module. In another example, remote attestation can be integrated with a transport layer security (TLS) handshake approach (e.g., an RA-TLS or attested TLS (aTLS) approach).

In some examples, any PP (which may include the HP) may invoke a process (e.g., a JOIN CMMI API endpoint process) that requests addition of a new party to the set of PPs. The request includes transmission of the identity/access credentials of the joining party (e.g., a X.509 certificate).

In other example, one of the PPs (which may include the HP) may invoke a setup proposal or process (e.g., a SETUP CMMI API endpoint process) that specifies one or more of: the exact version and cryptographic signature of the CE package to be deployed (e.g., which may reference a Kubernetes (K8s) distribution in a specific version); the exact version and cryptographic signature of the Policy Engine (PE) package to be deployed in the CE; a bundle of PE-specific policies that should be enforced by the PE; and the exact version and cryptographic signature of any other Deployable Unit (DU) that should be deployed by the controller software module in the CE after instantiation but before providing, to the PPs, access to the CE.

The PPs check the setup proposal by inspecting the proposal and comparing the cryptographic hash of the CR, PE, and all other DUs with the hash stored in a trustworthy registry (e.g., a sigstore storage location) or a hash derived from building the respective package and calculating the cryptographic hash. If any of the PPs rejects the setup proposal, the operation is aborted and another setup proposal can be invoked (e.g. by the same or a different PP).

If all PPs acknowledge/approve the setup proposal, the controller software module instantiates the MOCE by using the credentials injected or generated (e.g., by the HP) to launch the required infrastructure (e.g., one or more VMs, dynamic IP addresses, access control rules, etc.). If not covered by the CE-specific deployment tools, instantiating the MOCE can be automated using infrastructure as code (IaC) tools.

If the infrastructure is ready for use, the CTEE downloads the CE-specific deployment tool (e.g., Kubeadm in the case of Kubernetes-based CEs) and verifies the integrity of the tool by calculating a cryptographic hash over the package with the official hash from an authoritative source (e.g., sigstore). If the validation fails, the process is aborted, and the error is reported to the PPs via the CAPI.

The CTEE uses the respective deployment tool from within CTEE to launch the CE. Any credentials generated in this process to subsequently access the CTEE with administrative rights (e.g., kubectl credentials) and all other secrets generated throughout the setup process remain secret to and under full control of the CTEE. Accordingly, these secrets/credentials are never exposed outside of the CTEE.

After the CE is deployed, the policy engine package is verified (e.g., using a cryptographic hash check process as described above) and deployed via a CE-specific deployment mechanism (e.g., helm, when Kubernetes (K8s) deployment is implemented). The policy bundle is deployed via PE-specific mechanisms (e.g., by applying K8s manifests when a Kyverno K8s policy engine is used). Any other DUs are verified and deployed as described above.

For each registered PP, the CTEE creates an account in the CE with the associated credentials (e.g., a X.509 certificate) and the associated private key by using the administrative access assigned to the CTEE and makes the credentials and key available via the CMMI exclusively to the respective PP. Alternatively, access to the credentials and key may be provided over an out-of-band mechanism. The PPs are now able to interact with the CE under the policies enforced by the PE using the respective accounts of the PPs.

In a K8s-based example, for auditing purposes, PPs may be provided with mechanisms to understand the CE configuration (e.g., the set of active policies and the K8s access control configuration). This can be achieved, for example, by using readily available tools for role-based access control (RBAC) visualization. RBAC vulnerability scanners using static analysis can be used to identify risks associated with complex setups. In addition, every change to resources, in particular those targeting policies, arriving over the K8s API server can be intercepted by a Validating Admission Controller that logs changes to an immutable audit log (e.g., an audit log implemented using ledger technology). In other examples, the audit log can be implemented as part of the controller software module and exposed via PP-facing APIs. In other examples, changes may be described using a domain specific language and monitored and logged using custom software

The CE may experience dynamic group (PP) membership changes. In other words, membership in the group of PPs may change. For example, a new PP might join the group, an existing PP might leave the group, or an existing PP might need to rejoin the group if credentials of the PP were compromised by an attack. One example method for managing membership changes is to tear down the existing CE setup and recreate the new group. However, recreating the CE may incur unnecessary overhead. Accordingly, in other examples, the group membership may be dynamically changed through group membership policy updates.

For example, when a new member wishes to join (or leave) the group, an update to the policy may be proposed by an existing member (e.g., HP). The update specifies the addition identity of the new (or existing) member in the PP group or removal of the member from the PP group. Once the proposal is approved by existing members, the CTEE is provisioned with the identity and certificate of the new member (in the case of a new member joining the group) or the identity and certificate of the member is deleted (in case of an existing member leaving the group). The CTEE performs attestation for the new member (e.g., attests to the new member when the new member connects to the CTEE, which authenticates the new member using a respective certificate and provide the new member with credentials needed to access the CE). The CTEE creates a new account on the CE for the new member and shares the access credentials with the new member or, for a leaving member, deletes the account and access credentials of the leaving member. The policy update is recorded in the audit log.

In another example, existing membership in the group may be revoked. For example, if an existing member's security credentials (e.g., private key corresponding to certificate shared with CTEE) are compromised in an attack, the membership of the member must be revoked so that the attacker cannot masquerade as the PP member. As described above, the steps for first removing the member (and purging all credentials inside the CTEE and CE) are performed, which is followed by re-adding the member (with new credentials/accounts). The policy update is recorded in the audit log. In some examples the audit log entries created during the interval when the credentials of the victim PP were compromised may be tagged.

The CE described herein may implement various backup and recovery mechanisms. For example, recovery subsequent to catastrophic events affects both the CE as well as the CTEE. CE recovery can be performed using mechanisms provided by the CE. Various platforms may provide a recovery procedure in cases where the master key is not lost. The master key may be stored in the CTEE or in encrypted form on a storage system external to the CTEE. Backup and recovery of the CTEE can be implemented in various ways. In one example, a symmetric encryption key is generated within the CTEE and shared among the PPs using, for example, Secret Sharing. The CTEE (either on demand, following a schedule, or after each change) serializes its internal state (including the PP certificates and all relevant secrets), encrypts the internal state using the previously generated encryption key, and stores the state in an external storage system. The HP can later instantiate a vanilla CTEE. The PPs may then, after establishing trust as described above using RA, inject respective portions (e.g., secret shares) of the symmetric encryption key. The CTEE reconstructs the secret key, reads and decrypts the encrypted state from the external storage system, and initialize the CTEE state to recover the CE. In other examples, a threshold cryptosystem may be used, prior to setup of the CTEE, to generate a public/private key pair for which the private key is shared among the PPs. As a first step after instantiation of the CTEE, the PPs may, after establishing trust using RA, inject their secret shares of the private key. The controller can then derive a symmetric encryption key using a key derivation function.

The systems and methods described above may be implemented with one or more variations without departing from the principles of the present disclosure. For example, in cases where enforcement of policies for deploying/modifying/deleting policies are permitted, changes to the policies may be executed by direct interaction with the CE instead of going through the CMMI. In one example, resource creation in the CE is intercepted and the consensus process is managed by CE facilities. For K8s-based CE as described above, a K8s Mutating Admission Controller may be implemented to intercept any changes to a policy resource and instead create a policy change proposal custom resource (CR). The CR may be implemented by performing the original change on the policy only after being signed by all of the PPs.

In other examples, the management processes described above can be implemented in a GitOps-style CE management approach. In this case, a component within the CTEE monitors some external system containing the configuration data of the CE. This can be, for example, a Git repository or a distributed ledger. In this setting, it must be ensured that every change to the externally stored configuration is approved by all participating parties. For example, in the case of using Git, one approach to accomplish this is to only consider changes/actions that are signed with the private keys of all participating parties. When a ledger is used, a Multisig wallet can be used to ensure that transactions are authorized only when all participating parties have signed the transaction. In some examples, verification of the CE launched by the CTEE may also performed since the CE is a separate secure environment requiring validation.

In other examples, the confidential computing environment described above can be implemented using distributed computing nodes running various cryptographic protocols, such as secure multiparty computation protocols (e.g., MP-SPDZ)

FIG. 2 illustrates an example cooperative computing environment (CE) 200 according to the principles of the present disclosure. For example, the CE 200 includes a confidential computing system 204 (e.g., a computing environment implemented in a cloud computing system, one or more servers or distributed computing devices, a computing cluster, etc.) accessible by multiple developer entities (e.g., PPs, client computing devices, etc.) 208. The entities 208 may independently develop and test respective portions (e.g., workloads 212) of a software application within the computing system 204. In an example, the computing system 204 implements or is implemented by a confidential K8s cluster as described above.

The CE 200 according to the present disclosure is configured to remove the need for a trusted TP by using advanced privacy-preserving computing techniques to establish an interface to the CE 200 that provides a consensus-based setup and management mechanism for the CE 200 that performs a management operation only if all contributing entities agree.

For example, the CE 200 is configured to implement a trusted, consensus-based management gateway 216. In an example, the management gateway 216 is configured to implement and/or operate in accordance with a TEE. The management gateway 216 is used to set up and operate the CE 200 (e.g., via management and control of policy engine 220). In an example, a hosting party (HP), which may be one of the entities 208 or a third party entity, launches a controller TEE (CTEE) on a computing device of the confidential computing system 204. The controller TEE may be configured to execute the policy engine 220. The computing system 204 is further configured to implement other components of the systems and methods described above, such as the operating system, controller software module, etc.

The management gateway 216 is configured to function as an interface for admitting the execution of management operations in the computing system 204 only if a consensus among the entities 208 is reached that an operation is permitted. In some examples, "consensus" may require agreement from all entities. In other examples, consensus may be achieved by agreement from a subset of all entities (e.g., a number of entities less than a total number of the entities), by reaching a threshold value (e.g., a threshold value corresponding to a combination of weighted votes or values from respective entities), etc. For example, the management gateway 216 (in communication with and responsive to the controller software module implemented on/by the computing system 204) is configured to implement all or portions of the CMMI or CAPI described herein. Although shown separate from the computing system 204 (e.g., "off-cluster"), in other examples the management gateway 216 may be integrated with (e.g., located within) the computing system 204.

Accordingly, the management gateway 216 is configured to provide an interface over which the entities 208 can make a proposal or request for invoking a management functionality (e.g., via respective control paths 224). For example, any proposals or requests are provided from the entities 208 to the management gateway 216 and kept in a pending state until all (or a defined subset) of the entities 208 have approved the proposal in accordance with the systems and methods described herein.

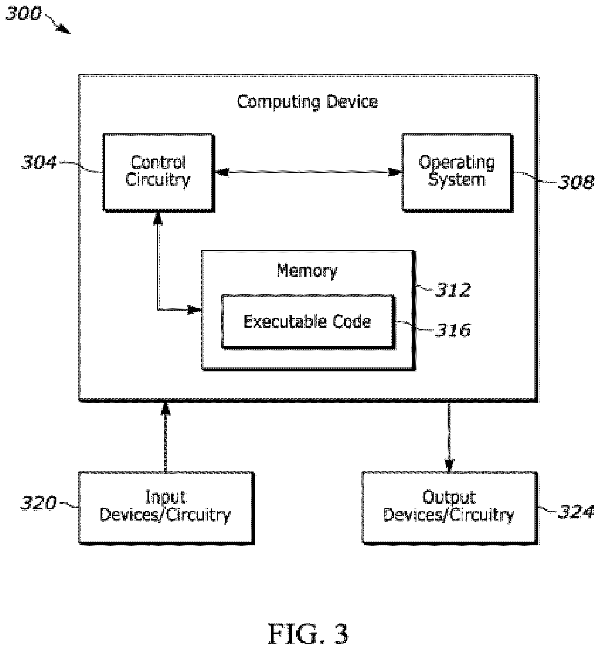

FIG. 3 shows a block diagram of an example computing device 300 configured to implement functions of the systems and methods described herein according to the present disclosure. For example, one or more of the computing devices 300 may implement or be implemented by the one or more components of the CE 200. Systems described herein may implement a single computing device, a plurality of computing devices, etc., configured to individually and/or collectively perform functions related to the systems and methods of the present disclosure. In an example, a host party implementing the computing system 204 may implement or include one or more of the computing devices 300.

The computing device 300 may include control circuitry 304 that may be, for example, one or more processors or processing devices, a central processing unit processor (a, CPU, such as a CPU configured to operate in accordance with a TEE), an integrated circuit or any suitable computing or computational device, an operating system 308, a memory 312, executable code 316, input devices or circuitry 320, and output devices or circuitry 324. The control circuitry 304 (or one or more controllers or processors, possibly across multiple units or devices) may be configured to implement functions of the systems and methods described herein. More than one of the computing devices 300 may be included in, and one or more of the computing devices 300 may act as the components of, a system according to embodiments of the disclosure. Various components of the computing device 300 may be implemented with same or different circuitry, same or different processors or processing devices, etc.

The operating system 308 may be or may include any code segment (e.g., one similar to the executable code 316 described herein) designed and/or configured to perform tasks involving coordination, scheduling, arbitration, supervising, controlling or otherwise managing operation of the control circuitry 304 (e.g., scheduling execution of software programs or tasks or enabling software programs or other hardware modules or units to communicate). The operating system 308 may be a commercial operating system. The operating system 308 may be an optional component (e.g., in some embodiments, a system may include a computing device that does not require or include the operating system 308). For example, a computer system may be, or may include, a microcontroller, an application specific circuit (ASIC), a field programmable array (FPGA), network controller (e.g., CAN bus controller), associated transceiver, system on a chip (SOC), and/or any combination thereof that may be used without an operating system.

The memory 312 may be or may include, for example, Random Access Memory (RAM), read only memory (ROM), Dynamic RAM (DRAM), Synchronous DRAM (SD-RAM), a double data rate (DDR) memory chip, Flash memory, volatile memory, non-volatile memory, cache memory, a buffer, a short-term memory unit, a long-term memory unit, or other suitable memory units or storage units. The memory 312 may be or may include a plurality of memory units, which may correspond to same or different types of memory or memory circuitry. The memory 312 may be a computer or processor non-transitory readable medium, or a computer non-transitory storage medium, e.g., RAM.

The executable code 316 may be any executable code, e.g., an application, a program, a process, task, or script. The executable code 316 may be executed by the control circuitry 304, possibly under control of the operating system 308. Although, for the sake of clarity, a single item of the executable code 316 is shown, a system according to some embodiments of the disclosure may include a plurality of executable code segments similar to the executable code 316 that may be loaded into the memory 312 and cause the control circuitry 304 to carry out methods described herein. Where applicable, the terms "process" and "executable code" may be used interchangeably herein. For example, verification, validation and/or authentication of a process may mean verification, validation and/or authentication of executable code.

In some examples, the memory 312 may include non-volatile memory having the storage capacity of a storage system. In other examples, the computing device 300 may include or communicate with a storage system and/or database. Such a storage system may include, for example, flash memory, memory that is internal to, or embedded in, a micro controller or chip, a hard disk drive, a solid-state drive, a CD-Recordable (CD-R) drive, a Blu-ray disk (BD), a universal serial bus (USB) device or other suitable removable and/or fixed storage unit. Content may be stored in the storage system and loaded from the storage system into the memory 312 where it may be processed by the control circuitry 304.

The input circuitry 320 may be or may include any suitable input devices, components, or systems, e.g., physical sensors such as accelerometers, thermometers, microphones, analog to digital converters, etc., a detachable keyboard or keypad, a mouse, etc. The output circuitry 324 may include one or more (possibly detachable) displays or monitors, motors, servo motors, speakers and/or any other suitable output devices. Any applicable input/output (I/O) devices may be connected to the control circuitry 304. For example, a wired or wireless network interface card (NIC), a universal serial bus (USB) device, or external storage device may be included in the input circuitry 320 and/or the output circuitry 324. It will be recognized that any suitable number of input devices and output devices may be operatively connected to the control circuitry 304. For example, the input circuitry 320 and the output circuitry 324 may be used by a technician or engineer in order to connect to the control circuitry 304, update software, and the like.

Embodiments may include an article such as a computer or processor non-transitory readable medium, or a computer or processor non-transitory storage medium, such as for example memory, a disk drive, or USB flash memory, encoding, including or storing instructions (e.g., computer-executable instructions, which, when executed by a processor or controller, carry out methods disclosed herein), a storage medium such as the memory 312, computer-executable instructions such as the executable code 316, and a controller such as the control circuitry 304.

The storage medium may include, but is not limited to, any type of disk including magneto-optical disks, semiconductor devices such as read-only memories (ROMs), random access memories (RAMs), such as a dynamic RAM (DRAM), erasable programmable read-only memories (EPROMs), flash memories, electrically erasable programmable read-only memories (EEPROMs), magnetic or optical cards, or any type of media suitable for storing electronic instructions, including programmable storage devices.

Embodiments of the disclosure may include components such as, but not limited to, a plurality of central processing units (CPU) or any other suitable multi-purpose or specific processors or controllers (e.g., controllers similar to the control circuitry 304), a plurality of input units, a plurality of output units, a plurality of memory units, and a plurality of storage units, etc. A system may additionally include other suitable hardware components and/or software components. In some embodiments, a system may include or may be, for example, a personal computer, a desktop computer, a mobile computer, a laptop computer, a notebook computer, a terminal, a workstation, a server computer, a Personal Digital Assistant (PDA) device, a tablet computer, a network device, or any other suitable computing device.

In some embodiments, a system may include or may be, for example, a plurality of components that include a respective plurality of central processing units, e.g., a plurality of CPUs as described, a plurality of CPUs embedded in an on-board system or network, a plurality of chips, FPGAs or SOCs, microprocessors, transceivers, microcontrollers, a plurality of computer or network devices, any other suitable computing device, and/or any combination thereof. For example, a system as described herein may include one or more devices such as the control circuitry 304.

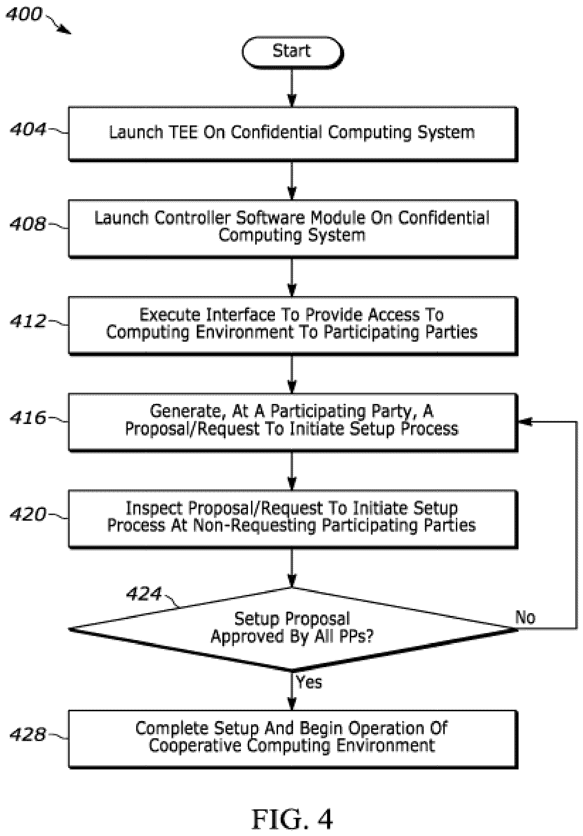

FIG. 4 illustrates steps of an example method 400 for setting up a cooperative computing environment according to the principles of the present disclosure. For example, one or more computing devices, processors or processing devices, etc. are configured to execute instructions to implement the method 400, such as one or more of processors of the systems described herein. In an example, the computing system 204 implements all or portions of the method 400.

At 404, a TEE is launched on confidential computing system. For example, a host party launches a controller TEE on a computing system as described herein. At 408, a controller software module is launched on the confidential computing system. For example, a computing device of the confidential computing system executes the controller software module. At 412, the method 400 executes an interface (e.g., an API, CMMI, etc. as described herein) to provide access for management functionality (e.g., of a policy engine) to PPs. For example, the interface provides access to the computing environment (e.g., to the policy engine, control plane components, build pipeline configuration, etc.) via a management gateway executed on and/or external to the computing system and the PPs perform remote attestation of the controller software module via the management gateway.

At 416, a PP invokes/initiates a setup process. For example, the PP generates and transmits a proposal/request to initiate the setup process to (via a control path) the management gateway. At 420, the PPs (e.g., non-requesting PPs) assess/inspect the proposal. For example, the PPs assess the proposal using a cryptographic hash as described herein. At 424, the method 400 determines whether all PPs (or a required subset of PPs) approve the proposal to initiate the setup process. If true, the method 400 continues to 428. If false, the method 400 continues to 416. The determination of whether the required amount of PPs approve a proposal may be performed subsequent to setup/initiation (i.e., subsequent to step 428 below) for any proposed changes/control operations, maintenance operations, etc. as described herein.

At 428, setup of the cooperative computing environment is completed. For example, a build process is launched as described and may include one or more of the variations described herein. Any changes/access to the policy engine proposed by any of the PPs are routed through the management gateway as described herein. In this manner, only changes/access approved by all PPs using consensus-driven techniques are permitted.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. It should be understood that one or more steps within a method may be executed in different order (or concurrently) without altering the principles of the present disclosure. Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

The various steps and logic performed herein can be executed with non-volatile storage, memory, and processors. Non-volatile storage may include one or more persistent data storage devices such as a hard drive, optical drive, tape drive, non-volatile solid-state device, cloud storage or any other device configured to persistently store information. Processor may include one or more devices selected from high-performance computing (HPC) systems including high-performance cores, microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on computer-executable instructions residing in memory. Memory may include a single memory device or a number of memory devices including, but not limited to, random access memory (RAM), volatile memory, non-volatile memory, static random access memory (SRAM), dynamic random access memory (DRAM), flash memory, cache memory, or any other device configured to store information.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the disclosure that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship can be a direct relationship where no other intervening elements are present between the first and second elements, but can also be an indirect relationship where one or more intervening elements are present (either spatially or functionally) between the first and second elements. As used herein, the phrases "at least one of A, B, and C" and "at least one of A, B, or C" should be construed to mean a logical (A OR B OR C), using a non-exclusive logical OR, and should not be construed to mean "at least one of A, at least one of B, and at least one of C."

The terms "a," "an," "the," and "said" as used herein in connection with any type of processing component configured to perform various functions may refer to one processing component configured to perform each and every function, or a plurality of processing components collectively configured to perform each of the various functions. By way of example, "A processor" configured to perform actions A, B, and C may refer to one or more processors configured to perform actions A, B, and C. In addition, "a processor" (or, "a processing device," "a computing device," and so on) configured to perform actions A, B, and C may also refer to a first processor configured to perform actions A and B, and a second processor configured to perform action C. Further, "A processor" configured to perform actions A, B, and C may also refer to a first processor configured to perform action A, a second processor configured to perform action B, and a third processor configured to perform action C.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer readable storage medium can repeat the steps of a method as many times as are needed to ensure that all of the contingent steps have been performed.

## Claims

1. A method for implementing a cooperative computing environment, the method comprising, using one or more computing devices:
establishing a first confidential computing system;
executing, on the first confidential computing system, a controller software module;
executing, using the controller software module, an interface configured to provide, to a plurality of participating parties, access to the computing environment;
receiving, via the interface from a requesting participating party of the plurality of participating parties, a request to initiate a setup process for the computing environment on a second confidential computing system; and
in response to a determination that non-requesting participating parties of the plurality of participating parties approved the request, completing the setup process for the computing environment in accordance with one or more criteria defined by the request.

2. The method of claim 1, wherein establishing the first confidential computing system includes launching, by a hosting party, a trusted execution environment (TEE) using the one or more computing device.

3. The method of claim 2, further comprising performing a remote attestation process between each of the plurality of participating parties and the controller software module.

4. The method of claim 3, wherein executing the controller software module includes at least one of (i) providing source code of the controller software module to the plurality of participating parties and (ii) providing a cryptographic measurement of the controller software module to the plurality of participating parties.

5. The method of claim 1, further comprising at least one of:
determining whether the non-requesting participating parties of the plurality of participating parties approve the request;
determining whether a predetermined subset of the non-requesting participating parties of the plurality of participating parties approve the request; and
assigning respective weights to each of the participating parties, defining a threshold for acceptance of requests, obtaining a weighted sum of responses from the non-requesting participating parties, and performing at least one operation of the setup process in response to the weighted sum exceeding the defined threshold.

6. The method of claim 1, further comprising, subsequent to completing the setup process, changing a configuration of the cooperative computing environment by (i) receiving a request from a first participating party to execute a change to the configuration of the cooperative computing environment and (ii) executing the change to the configuration of the cooperative computing environment by at least one of:
determining that the non-requesting participating parties of the plurality of participating parties approve the request;
determining that a predetermined subset of the non-requesting participating parties of the plurality of participating parties approve the request; and
assigning respective weights to each of the participating parties, defining a threshold for acceptance of requests, obtaining a weighted sum of responses from the non-requesting participating parties, and executing the change in response to the weighted sum exceeding the defined threshold.

7. The method of claim 6, wherein the change corresponds to a request to at least one of add a new party from the plurality of participating parties and remove a party from the plurality of participating parties.

8. The method of claim 1, wherein the one or more computing devices include at least one processor configured to operate a trusted execution environment (TEE).

9. The method of claim 1, wherein the first confidential computing system requests validation of the second confidential computing system by remote attestation.

10. The method of claim 1, wherein (i) the first confidential computing system is comprised of a plurality of computing devices executing a secure multiparty computation protocol or (ii) the second confidential computing system is comprised of a plurality of computing devices executing a secure multiparty computation protocol.

11. A system configured to implement a cooperative computing environment, the system comprising:
one or more computing devices configured to
establish a first confidential computing system,
execute, on the first confidential computing system, a controller software module, and
execute, using the controller software module, an interface configured to provide, to a plurality of participating parties, access to the computing environment; and
a management gateway configured to execute one or more functions of the interface, the management gateway configured to receive, from a requesting participating party of the plurality of participating parties, a request to initiate a setup process for the computing environment on a second confidential computing system; and
wherein, in response to a determination that non-requesting participating parties of the plurality of participating parties approved the request, the one or computing devices are configured to complete the setup process for the computing environment in accordance with one or more criteria defined by the request.

12. The system of claim 11, wherein establishing the first confidential computing system includes launching, by a hosting party, a trusted execution environment (TEE) using the one or more computing device.

13. The system of claim 12, wherein the one or more computing devices are configured to perform a remote attestation process between each of the plurality of participating parties and the controller software module.

14. The system of claim 13, wherein executing the controller software module includes at least one of (i) providing source code of the controller software module to the plurality of participating parties and (ii) providing a cryptographic measurement of the controller software module to the plurality of participating parties.

15. The system of claim 11, wherein the one or more computing devices are configured to at least one of:
determine whether the non-requesting participating parties of the plurality of participating parties approve the request;
determine whether a predetermined subset of the non-requesting participating parties of the plurality of participating parties approve the request; and
assign respective weights to each of the participating parties, define a threshold for acceptance of requests, obtain a weighted sum of responses from the non-requesting participating parties, and perform at least one operation of the setup process in response to the weighted sum exceeding the defined threshold.

16. The system of claim 11, wherein the one or more computing devices are configured to, subsequent to completing the setup process, change a configuration of the cooperative computing environment by (i) receiving, via the management gateway, a request from a first participating party to execute a change to the configuration of the cooperative computing environment and (ii) executing the change to the configuration of the cooperative computing environment by at least one of:
determining that the non-requesting participating parties of the plurality of participating parties approve the request;
determining that a predetermined subset of the non-requesting participating parties of the plurality of participating parties approve the request; and
assigning respective weights to each of the participating parties, defining a threshold for acceptance of requests, obtaining a weighted sum of responses from the non-requesting participating parties, and executing the change in response to the weighted sum exceeding the defined threshold.

17. The system of claim 16, wherein the change corresponds to a request to at least one of add a new party from the plurality of participating parties and remove a party from the plurality of participating parties.

18. The system of claim 11, wherein the first confidential computing system requests validation of the second confidential computing system by remote attestation.

19. The system of claim 11, wherein at least one of (i) the first confidential computing system is comprised of a plurality of computing devices executing a secure multiparty computation protocol and (ii) the second confidential computing system is comprised of a plurality of computing devices executing a secure multiparty computation protocol.

20. A system configured to implement a cooperative computing environment, the system including a processing device configured to execute instructions stored in memory to:
using one or more computing devices, establish a first confidential computing system;
execute, on the first confidential computing system, a controller software module;
execute, using the controller software module, an interface configured to provide, to a plurality of participating parties, access to the computing environment;
receive, via the interface from a requesting participating party of the plurality of participating parties, a request to initiate a setup process for the computing environment on a second confidential computing system; and
in response to a determination that non-requesting participating parties of the plurality of participating parties approved the request, complete the setup process for the computing environment in accordance with one or more criteria defined by the request.
